# EUROPÄISCHE PATENTSCHRIFT

(11) **EP 0 482 504 B1**
(45) Veröffentlichungstag und Bekanntmachung des Hinweises auf die Patenterteilung: **17.08.1994**
(21) Anmeldenummer: 91117693.1
(22) Anmeldetag: 17.10.1991
(51) Int. Cl.: H02H 7/122

(54) **Verfahren zum Schutz der abschaltbaren Leistungshalbleiter eines Wechselrichters bei Ausgangskurzschlüssen**
Method of protecting turn-off semiconductor power devices during short-circuits of an inverter output
Méthode de protection de semi-conducteurs de puissance à extinction commandable dans un onduleur lors de court-circuits de sortie

(30) Priorität: 23.10.1990 DE 4033603
(43) Veröffentlichungstag der Anmeldung: 29.04.1992
(73) Patentinhaber: ABB PATENT GmbH, 68309 Mannheim (DE)
(72) Erfinder: Peppel, Michael, Dr., W-6940 Weinheim (DE)
(74) Vertreter: Rupprecht, Klaus, Dipl.-Ing.

(56) Entgegenhaltungen:
- EP-A- 0 152 579
- EP-A- 0 416 488
- DE-A- 3 341 398
- PATENT ABSTRACTS OF JAPAN vol. 13, no. 232 (E-765)(3580) 29 Mai 1989& JP-A-01 39227 (HITACHI) 09 Februar 1989

## Beschreibung

Die Erfindung bezieht sich auf ein Verfahren zum Schutz der abschaltbaren Leistungshalbleiter eines eingangsseitig an einen Gleichspannungszwischenkreis geschalteten Wechselrichters in Drehstrom-Brückenschaltung bei Ausgangskurzschlüssen, wobei ein Zwischenkreis-Kurzschließer am Eingang und Ausgangsdrosseln am Ausgang des Wechselrichters vorgesehen sind.

Eine Anwendung ist vorzugsweise bei GTO-Pulswechselrichtern für Traktionsantriebe möglich.

Es ist allgemein bekannt, zum Schutz der abschaltbaren Leistungshalbleiter eines an einem Gleichspannungszwischenkreis betriebenen Wechselrichters bei Ausgangskurzschlüssen alle Leistungshalbleiter der am selben Gleichspannungszwischenkreis angeschlossenen Stromrichter und gegebenenfalls zusätzliche Kurzschließer-Thyristoren einzuschalten. Durch diese Schutzdurchzündung wird die Zwischenkreisspannung sehr schnell abgebaut, wobei sich der Kurzschlußstrom auf viele Zweige verteilt. Die Strombelastung der einzelnen Leistungshalbleiter bleibt dadurch innerhalb des zulässigen Bereiches und die Halbleiter überstehen den Kurzschluß unbeschadet.

Wenn der Kurzschlußstrom alternativ hierzu von den abschaltbaren Leistungshalbleitern selbst unterbrochen werden soll, benötigt der Stromrichter Ausgangsdrosseln, die die Steilheit des Ausgangs-Kurzschlußstromes auf derartige Werte begrenzen, daß die Leistungshalbleiter auch nach der unvermeidlichen Zeitverzögerung zwischen dem Kurzschlußeintritt und dem Schaltaugenblick der Leistungshalbleiter den dann fließenden Stroms noch schalten können.

Die eingangs erwähnte Schutzdurchzündungsmethode erfordert eine Vergrößerung der Induktivitäten zur di/dt-Begrenzung der Leistungshalbleiter über den für den Normalbetrieb des Stromrichters notwendigen Wert hinaus. Dadurch entstehen im Stromrichter in nachteiliger Weise während des Normalbetriebes höhere Schaltverluste und höhere Schaltüberspannungen. Weiterhin sind die zusätzlichen Zwischenkreis-Kurzschließer wegen der hohen dynamischen Anforderungen oft sehr teuer. Außerdem werden bei der Schutzdurchzündungsmethode bei Traktionsstromrichtern alle Motoren kurzgeschlossen, die aus demselben Zwischenkreis versorgt werden und zwar auch dann, wenn sie über verschiedene Stromrichter gespeist werden. Hierdurch ergibt sich eine hohe mechanische Belastung aller Motoren und Getriebe. Ferner muß die Antriebsanlage nach jeder Durchzündung neu aufgerüstet werden. Der Bedarf an schneller Kommunikation zwischen den Phasen und Stromrichtern untereinander ist zudem relativ hoch. Der Vorteil der Schutzdurchzündung liegt in ihrer guten Schutzwirkung, da sie sogar interne Kurzschlüsse im Stromrichter beherrschen kann.

Bei der alternativ erwähnten Abschaltmethode sind weder Kurzschließer noch Komnunikationen zwischen den Stromrichtern erforderlich. Bei Traktionsstromrichtern werden Motoren, die über andere Stromrichter aus demselben Zwischenkreis gespeist werden, vorteilhaft nicht kurzgeschlossen. Bei Einzelachsspeisung einer Lokomotive wird nur der vom Primärfehler (Kurzschluß) direkt betroffene Motor kurzgeschlossen. Der defekte Anlagenteil wird ohne Betriebsunterbrechung der Gesamtanlage automatisch elektrisch abgetrennt. Die Abschaltmethode erfordert jedoch in nachteiliger Weise sehr große Ausgangsinduktivitäten am Stromrichter, wenn die Leistungshalbleiter hoch ausgenützt werden sollen, da der noch zulässige Stromanstieg während der Zeitspanne zwischen den Kurzschlußeintritt bis zum Sperren der Leistungshalbleiter relativ gering ist. Wegen der erforderlichen Baugröße der Drosseln scheidet die Abschaltmethode vor allem für Traktionsantriebe aus.

Der Erfindung liegt die Aufgabe zugrunde, ein Verfahren zum Schutz der abschaltbaren Leistungshalbleiter eines Wechselrichters bei Ausgangskurzschlüssen der eingangs genannten Art anzugeben, das eine Leistungshalbleiterzerstörung mit Sicherheit verhindert, ohne daß dabei im Normalbetrieb höhere Schaltverluste und Schaltüberspannungen auftreten und ohne daß dabei übergroße Ausgangsdrosseln notwendig sind.

Diese Aufgabe wird in Verbindung mit den Merkmalen des Oberbegriffes des Anspruchs 1 erfindungsgemäß dadurch gelöst, daß bei Auftreten eines Ausgangskurzschlusses
- alle abschaltbaren Leistungshalbleiter einer Phase durch Ausschaltsignale gesperrt werden, wenn diese Phase am Kurzschluß beteiligt ist und ihr Laststrommeßwert im Augenblick der Erkennung des Kurzschlusses kleiner als ein vorgebbarer erster Grenzwert ist,
- alle abschaltbaren Leistungshalbleiter einer am Kurzschluß nicht beteiligten Phase durch Ausschaltsignale gesperrt werden,
- die abschaltbaren Leistungshalbleiter einer am Kurzschluß beteiligten Stromrichterphase durch Löschsperrsignale den augenblicklich bestehenden Schaltzustand beibehalten, wenn der Laststrommeßwert dieser Phase den ersten Grenzwert überschreitet, wobei ein Löschsperrsignal Vorrang vor einem Ausschaltsignal hat,
- und der Zwischenkreis-Kurzschließer durchgeschaltet wird, wenn der Laststrommeßwert einer beliebigen Stromrichterphase einen über dem ersten Grenzwert liegenden zweiten Grenzwert überschreitet.

Die mit der Erfindung erzielbaren Vorteile liegen insbesondere darin, daß die im Vergleich zur Schutzdurchzündungsmethode zusätzlich notwendigen Ausgangsdrosseln nicht in den Kommutierungskreisen der Leistungshalbleiter liegen und somit keine höheren Schaltverluste oder Schaltüberspannungen während des Normalbetriebes verursachen. Weiterhin kann die Induktivität dieser Ausgangsdrosseln wesentlich geringer als bei der Abschaltmethode bemessen sein - bei Traktionsstromrichtern mit üblichen Strom- und Spannungs-Nennwerten ist die Induktivit nur etwa ein Drittel bis ein Fünftel so groß zu dimensionieren, ohne daß dabei die hohe Ausnutzung der Leistungshalbleiter herabgesetzt werden muß. Damit sind die zusätzlich notwendigen Ausgangsdrosseln hinsichtlich Gewicht und Volumen, insbesondere auch bei Traktionsstromrichtern akzeptabel.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig. 1: einen an einen Gleichspannungszwischenkreis geschalteten, eine Last speisenden GTO-Wechselrichter,
- Fig. 2: die prinzipielle Struktur der signalverarbeitenden Schaltung zum Schutz des GTO-Wechselrichters bei ausgangsseitigen Kurzschlüssen.

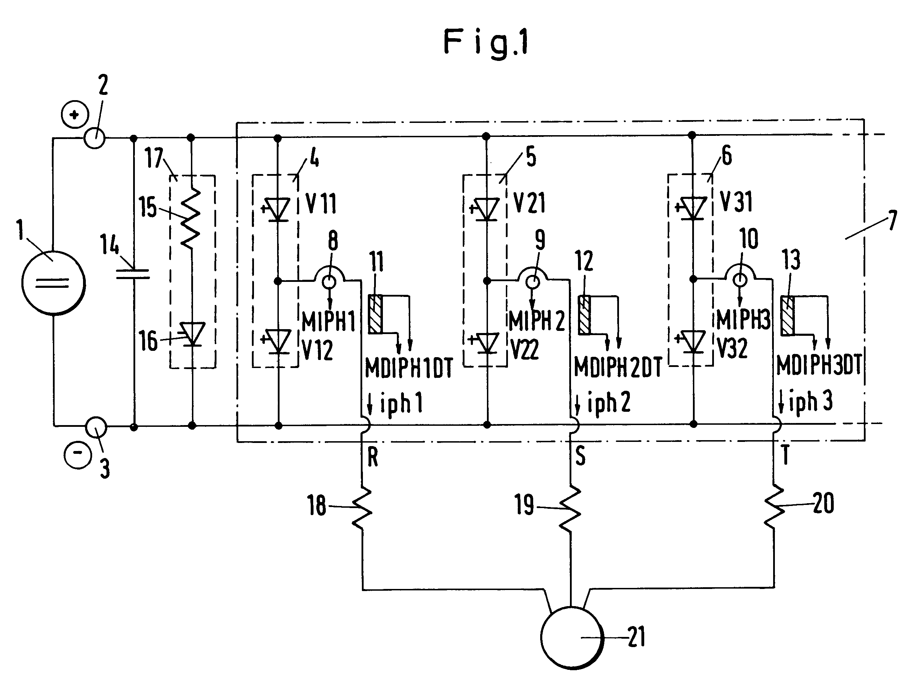

In Figur 1 ist ein an einen Gleichspannungszwischenkreis geschalteter, eine Last speisender GTO-Wechselrichter dargestellt. Es ist eine Gleichspannungsquelle 1 zu erkennen, zwischen deren positivem Pol 2 bzw. negativem Pol 3 drei Stromrichterphasen 4, 5, 6 (Stränge) eines an einem Gleichspannungszwischenkreis zu betreibenden, dreiphasigen GTO-Wechselrichters 7 geschaltet sind. Der in Drehstrom-Brückenschaltung aufgebaute GTO-Wechselrichter 7 weist sechs Zweige mit jeweils einem GTO-Thyristor V11, V12, V21, V22, V31, V32 (allgemein: abschaltbare Leistungshalbleiter) als Hauptventile auf. Die GTO-Thyristoren V11, V12 bilden die erste Stromrichterphase 4. Die GTO-Thyristoren V21, V22 bilden die zweite Stromrichterphase 5 und die GTO-Thyristoren V31, V32 bilden die dritte Stromrichterphase 6. Die jedem GTO-Thyristor antiparallel liegende Diode sowie die Entlastungsnetzwerke der einzelnen Stränge und die Steuereinrichtungen zum Zünden und Löschen der GTO-Thyristoren sind aus Gründen der Übersichtlichkeit nicht dargestellt.

Jeweils am gemeinsamen Verbindungspunkt der beiden GTO-Zweige einer jeden Stromrichterphase 4, 5, 6 (Strang) greifen die drei Wechselspannungsausgänge des Wechselrichters zur Bildung der drei Phasen R, S, T an. Zur Erfassung der drei wechselspannungsseitig fließenden Lastströme (Phasenströme) iph1, iph2, iph3 sind Stromerfassungseinrichtungen 8, 9, 10 vorgesehen. Die entsprechenden Laststrommeßwerte sind mit MIPH1, MIPH2, MIPH3 bezeichnet. Zusätzlich sind an den drei Wechselspannungsausgängen des Wechselrichters Stromanstiegserfassungseinrichtungen 11, 12, 13 zur Erfassung der Stromanstiegsmeßwerte MDIPH1DT, MDIPH2DT, MDIPH3DT der Lastströme iph1, iph2, iph3 vorgesehen.

Der Zwischenkreiskondensator des Gleichspannungszwischenkreises ist mit 14 bezeichnet. Die Pole 2, 3 des Gleichspannungszwischenkreises sind über einen Zwischenkreis-Kurzschließer 17, bestehend aus der Reihenschaltung einer Kurzschließer-Drossel 15 und eines Kurzschließer-Thyristors 16, miteinander verbindbar. Der Kurzschließer ist je Zwischenkreis einmal vorhanden.

Aus den drei Wechselspannungsausgängen des Wechselrichters ist über Ausgangsdrosseln 18, 19, 20 eine dreiphasige, induktive Last 21, vorzugsweise eine als Traktionsantrieb dienende Asynchronmaschine angeschlossen. Die Ausgangsdrosseln sind je Wechselrichter einmal vorhanden.

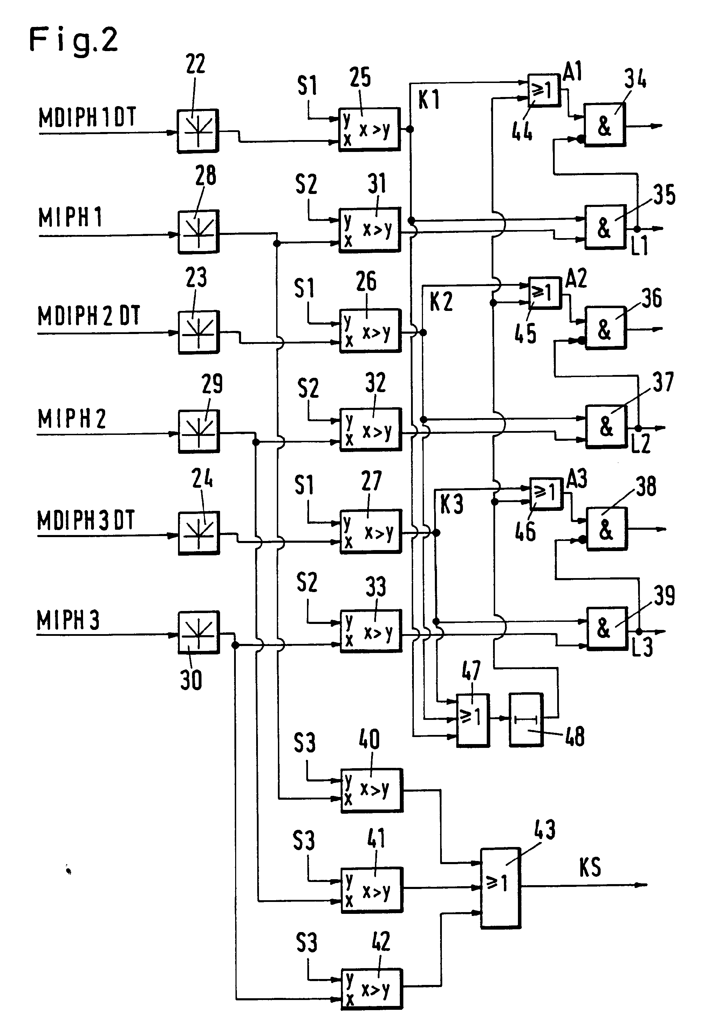

In Figur 2 ist die prinzipielle Struktur der signalverarbeitenden Schaltung zum Schutz des GTO-Wechselrichters bei ausgangsseitigen Kurzschlüssen dargestellt. Es sind drei Betragsbildner 22, 23, 24 zu erkennen, denen eingangsseitig die Stromanstiegsmeßwerte MDIP1DT, MDIPH2DT, MDIPH3DT zugeführt werden und die die Beträge dieser Größen den x-Eingängen von Komparatoren 25, 26, 27 zuleiten. Den y-Eingängen dieser Komparatoren 25, 26, 27 liegt jeweils ein vorgebbarer Grenzwert S1 an.

Desweiteren sind drei Betragsbildner 28, 29, 30 zu erkennen, denen eingangsseitig die Laststrommeßwerte MIPH1, MIPH2, MIPH3 zugeführt werden und die die Beträge dieser Größen den x-Eingängen von Komparatoren 31, 32, 33 zuleiten. Den y-Eingängen dieser Komparatoren 31, 32, 33 liegt jeweils ein vorgebbarer Grenzwert S2 an.

Die Komparatoren 25, 26, 27, 31, 32, 33 geben ausgangsseitig immer dann ein positives Signal ab, wenn der Wert des am x-Eingang liegenden Signals den Wert des am y-Eingang anstehenden Signals übersteigt. Im einzelnen ist der Ausgang des Komparators 25 mit den ersten Eingängen eines ODER-Gatters 44 und eines UND-Gatters 35 verbunden. Der Ausgang des ODER-Gatters 44 führt zum ersten Eingang eines UND-Gatters 34. Der Ausgang des Komparators 31 ist an den zweiten Eingang des UND-Gatters 35 angeschlossen. Der Ausgang des UND-Gatters 35 ist mit dem invertierenden zweiten Eingang des UND-Gatters 34 verbunden. In gleicher Weise ist der Ausgang des Komparators 26 mit den ersten Eingängen eines ODER-Gatters 45 und eines UND-Gatters 37 verbunden. Der Ausgang des ODER-Gatters 45 führt zum ersten Eingang eines UND-Gatters 36. Der Ausgang des Komparators 32 ist an den zweiten Eingang des UND-Gatter 37 angeschlossen. Der Ausgang des UND-Gatters 37 ist mit dem invertierenden zweiten Eingang des UND-Gatters 36 verbunden. Schließlich ist analog hierzu der Ausgang des Komparators 27 mit den ersten Eingängen eines ODER-Gatters 46 und eines UND-Gatters 39 verbunden. Der Ausgang des ODER-Gatters 46 führt zum ersten Eingang eines UND-Gatters 38. Der Ausgang des Komparators 33 ist an den zweiten Eingang des UND-Gatters 39 angeschlossen. Der Ausgang des UND-Gatters 39 ist mit dem invertierenden zweiten Eingang des UND-Gatters 38 verbunden.

Die an den Ausgängen der Komparatoren 25, 26, 27 gegebenenfalls anstehenden Kurzschlußmeldesignale K1, K2, K3 werden zusätzlich den Eingängen eines ODER-Gatters 47 zugeleitet. Das Ausgangssignal dieses ODER-Gatters 47 wird mittels eines Verzögerungsgliedes 48 verzögert. Dieses Verzögerungsglied ist ausgangsseitig mit den jeweils zweiten Eingängen der ODER-Gatter 44, 45, 46 verbunden.

An den Ausgängen der ODER-Gatter 44 bzw. 45 bzw. 46 stehen gegebenenfalls Ausschaltsignale A1 bzw. A2 bzw. A3 zum Ausschalten der GTO-Thyristoren V11, V12 bzw. V21, V22 bzw. V31, V32 an, während den Ausgängen der UND-Gatter 35 bzw. 37 bzw. 39 gegebenenfalls Löschsperrsignale L1 bzw. L2 bzw. L3 für die GTO-Thyristoren V11, V12 bzw. V21, V22 bzw. V31, V32 entnehmbar sind.

Die Ausgänge der Betragsbildner 28 bzw. 29 bzw. 30 sind desweiteren mit den x-Eingängen von Komparatoren 40 bzw. 41 bzw. 42 verbunden. Den y-Eingängen dieser Komparatoren 40, 41, 42 liegt jeweils ein Grenzwert S3 an. Die Komparatoren 40, 41, 42 geben ausgangsseitig ebenfalls immer dann ein positives Signal ab, wenn der Wert des am x-Eingang liegenden Signals den Wert des am y-Eingang anstehenden Signals übersteigt. Die Ausgänge der Komparatoren 40, 41, 42 sind dabei mit Eingängen eines ODER-Gatters 43 verbunden, wobei diesem ODER-Gatter ausgangsseitig gegebenenfalls ein Zündsignal ZS für den Kurzschließer-Thyristor 16 entnehmbar ist.

Liegt für einen GTO-Thyristor sowohl ein Ausschaltsignal A1 oder A2 oder A3 als auch ein Löschsperrsignal L1 oder L2 oder L3 vor, so hat das Löschsperrsignal Vorrang vor dem Ausschaltsignal, d.h. das Ausschaltsignal ist unwirksam. Dies wird durch die UND-Gatter 34,36,38 erreicht, die die Ausschaltsignale A1, A2, A3 nur durchschalten, wenn die zugehörigen Löschsperrsignale L 1, L2, L3 nicht aktiv sind.

Durch die Veroderung der Kurzschlußmeldesignale K1, K2, K3 mittels ODER-Gatter 44, 45, 46 einerseits und dem ODER-Gatter 47 mit nachgeschaltetem Verzögerer andererseits wird die Abschaltung der nicht am Kurzschluß beteiligten Phasen erzielt. Da das Ausgangssignal des ODER-Gatters 47 mit Hilfe des Verzögerungsgliedes 48 verzögert wird, ist sichergestellt, daß primär ein erzeugtes Löschsperrsignal an die Gate-Unit des betroffenen GTO-Thyristors gelangt und erst sekundär das verzögerte Ausschaltsignal. Das Ausschaltsignal ist demnach nur wirksam, wenn kein Löschsperrsignal für den betroffenen GTO-Thyristor vorliegt. Die Verzögerungszeit des Verzögerungsgliedes 48 ist so zu bemessen, daß die bei Bildung der Löschsperrsignale auftretenden Signalverzögerungen mit Sicherheit kürzer sind als die Summe aus den bei Bildung der Kurzschlußmeldesignale auftretenden Signalverzögerungen und der Verzögerungszeit des Verzögerungsgliedes 48.

Nachfolgend wird das Verfahren zum Schutz der GTO-Thyristoren von Wechselrichtern bei Ausgangskurzschlüssen beschrieben. Als Ausgangskurzschluß kann z.B. ein zweipoliger Kurzschluß zwischen zwei Stromrichterphasen oder ein Erdschluß zwischen einer Stromrichterphase und Erde auftreten, wobei jeweils die Induktivität der dreiphasigen Last 21 nicht zur Begrenzung der fließenden Kurzschlußströme beitragen kann. Das vorgeschlagene Konzept zur Beherrschung der Ausgangskurzschlüsse besteht aus mehreren aufeinander aufbauenden Schutzverfahren, die entsprechend dem Laststrom der GTO-Thyristoren bzw. seiner zeitlichen Ableitung im Kurzschlußaugehblick ausgewählt werden. Dabei wird vorausgesetzt, daß ein Ausgangskurzschluß anhand der zeitlichen Ableitung des Laststromes erkannt wird, bevor sich ein gefährlich hoher Kurzschlußstrom aufgebaut hat.

In diesem Zusammenhang wird auf die europäische Patentanmeldung EP-416 488 "Verfahren und Vorrichtung zur Bildung eines Löschsperrsignales für abschaltbare Leistungshalbleiter" hingewiesen, bei der zur Unterdrückung von unzulässigen Löschversuchen ein Löschsperrsignal dann abgegeben wird, wenn die Summe aus dem aktuellen Laststrom einer Phase des Stromrichters und dem Produkt der zeitlichen Ableitung des Laststromes und der maximalen Speicherzeit eines Leistungshalbleiters größer als der maximale, periodisch abschaltbare Anodenstrom eines Leistungshalbleiters ist. Insbesondere wird dort ein Löschsperrsignal dann abgegeben, wenn die zeitliche Ableitung eines Zweigstromes des Stromrichters einen Schwellwert proportional zu der dem Stromrichter zugeführten Spannung überschreitet und folglich ein Kurzschluß des Stromrichters vorliegt. Es wird auf die die Bildung von Löschsperrsignalen behandelnden Ausführungen in dieser Schrift verwiesen.

Tritt ein Ausgangskurzschluß auf, so geschieht folgendes:
Ist der Betrag des Laststromes einer am Kurzschluß beteiligten Stromrichterphase im Augenblick der Erkennung des Kurzschlusses (die Erkennung erfolgt durch Vergleich des Betrages von MDIPH1DT, MDIPH2DT, MDIPH3DT mit dem Grenzwert S1) kleiner als der vorgegebene Grenzwert S2, so wird die beteiligte Stromrichterphase gesperrt, d.h. beide GTO-Thyristoren dieser Stromrichterphase werden ausgeschaltet. Löschsperrsignale werden nicht erzeugt, so daß die gebildeten Ausschaltsignale über die UND-Gatter 34,36,38 durchgeschaltet werden.

Ist der Betrag des Laststromes einer vom Kurzschluß direkt betroffenen Stromrichterphase im Augenblick des Erkennens des Kurzschlusses größer als der Grenzwert S2, so erhält diese Stromrichterphase Löschsperre, d.h. der gerade bestehende Schaltzustand der GTO-Thyristoren dieser Stromrichterphase bleibt erhalten, indem die gerade leitenden GTO-Thyristoren leitend und die gerade gesperrten GTO-Thyristoren gesperrt bleiben (siehe Löschsperrsignale L1, L2, L3).

Nach Ablauf der vom Verzögerungsglied 48 vorgegebenen Verzögerungszeit nach der Kurzschlußerkennung (Auftreten mindestens eines Kurzschlußmeldesignals K1, K2, K3) werden auch die vom Kurzschluß nicht direkt betroffenen Stromrichterphasen gesperrt. Dies sind bei Erdschluß zwei Stromrichterphasen und bei zweipoligem Kurzschluß ist es die dritte Stromrichterphase.

Übersteigt der Laststrom in einer beliebigen Stromrichterphase deutlich den maximalen Abschaltstrom des GTO-Thyristors (z.B. um 10 bis 20%; dies wird durch den Grenzwert S3 vorgegeben), so wird der Thyristor 16 des Zwischenkreis-Kurzschließers 17 gezündet (siehe Zündsignal KS).

Diese vorstehend pauschal aufgelisteten schaltungstechnischen und steuerungstechnischen Maßnahmen wirken wie folgt:
Ist der Wechselrichter im Kurzschlußaugenblick zufällig so gering belastet, daß alle Lastströme unter dem Grenzwert S2 liegen, so sperren innerhalb kurzer Zeit alle Stromrichterphasen und der Kurzschluß wird hierdurch abgeschaltet. Dies hat den Vorteil, daß ein kontinuierlicher Weiterbetrieb der Gesamtanlage (z.B. Lokomotive) möglich ist und ein Kurzschluß weiterer Motoren vermieden wird.

Ist die Belastung des Wechselrichters höher, so daß der Laststrom einer Stromrichterphase über dem Grenzwert S2 liegt, die Lastströme der übrigen beiden Stromrichterphasen aber darunter, so sperren zwei Stromrichterphasen, während ein GTO-Thyristor der dritten Stromrichterphase aufgrund des Vorranges des Löschsperrsignales vor dem Ausschaltsignal weiterleitet. Auch in diesem Fall wird der kurzgeschlossene Stromrichterausgang vom Zwischenkreis abgetrennt, wenn auch nur einpolig. Ein Freilaufweg für den Kurzschlußstrom entsteht, wobei der Kurzschlußstrom jedoch nicht auf gefährlich hohe Werte ansteigt. Auch in diesem Fall werden vorteilhaft Kurzschlüsse weiterer Motoren und eine Betriebsunterbrechung der Gesamtanlage vermieden.

Liegt der Laststrom in zwei oder mehr Stromrichterphasen über dem Grenzwert S2, so kann der Kurzschluß nicht von den GTO-Thyristoren abgeschaltet werden und es werden entsprechende Löschsperrsignale erzeugt. In diesem Fall steigt der Kurzschlußstrom weiter und der Kurzschließer-Thyristor wird nach kurzer Zeit gezündet.

Es entsteht ein Stoßkurzschluß des Zwischenkreises. Die Aufteilung des Stoßkurzschlußstromes auf den Zwischenkreis-Kurzschließer 17 und den ausgangsseitig kurzgeschlossenen Wechselrichter wird durch die Induktivität der Kurzschließer-Drossel 15 einerseits und die Induktivitäten im ausgangsseitig kurzgeschlossenen Wechselrichter andererseits bestimmt. Die Ausgangsdrosseln 18, 19, 20 des Stromrichters müssen so ausgelegt werden, daß der Stoßstromanteil des ausgangsseitig kurzgeschlossenen Wechselrichters stets innerhalb der zulässigen Belastungsgrenzen der GTO-Thyristoren bleibt. Dieses Kriterium bestimmt entscheidend die Dimensionierung der Ausgangsdrosseln.

Der Zwischenkreis-Kurzschließer 17 ist derart auszulegen, daß er den Zwischenkreis allein entladen kann, wobei das zulässige di/dt des Thyristors 16 ausgenutzt werden sollte.

Wenn die Induktivität der Kurzschließer-Drossel 15 bekannt ist, kann die Induktivität der Ausgangsdrosseln 18, 19, 20 so bestimmt werden, daß der Stoßstromgrenzwert der GTO-Thyristoren bei der Entladung des Zwischenkreises durch den gezündeten Kurzschließer-Thyristor in jedem Fall eingehalten wird.

Wenn die Induktivität der Ausgangsdrosseln 18, 19, 20 bekannt ist, kann der Grenzwert S2 für den Laststrom (Sperren/Löschsperre) so festgelegt werden, daß bei Kurzschlußabschaltungen, d.h. Sperren der Leistungshalbleiter, niemals das Abschaltvermögen des GTO-Thyristors überschritten wird.

Wie vorstehend bereits ausgeführt, wird der Kurzschluß erkannt, wenn ein der Steilheit des Ausgangsstromes proportionales Meßsignal MDIPH1DT oder MDIPH2DT oder MDIPH3DT dem Betrag nach den Grenzwert S1 übersteigt. Der Grenzwert S1 ist so zu legen, daß er im Normalbetrieb, d.h. mit angeschlossener induktiver Last, niemals erreicht, bei Kurzschluß, d.h. bei unwirksamer Lastinduktivität, aber sicher überschritten wird. Durch die Betragsbildung mittels Baukomponenten 22, 23, 24 wirkt die Kurzschlußerkennung für beide Stromrichtungen.

Die Komparatoren 31, 32, 33 vergleichen die Beträge der den Lastströmen selbst proportionalen Meßsignale MIPH1, MIPH2, MIPH3 mit dem Grenzwert S2. Die Ausgangssignale dieser Komparatoren 31, 32, 33 liefern damit die Auswahlinformationen, ob die betreffenden Phasen mittels der Ausschaltsignale gesperrt werden oder ob die Löschsperre aktiviert wird. Die Auswahl und Signaldurchschaltung geschieht durch die UND-Gatter 34 bis 39. Die gegenseitige Verriegelung der Signale untereinander und ihre Integration in die übrige Schutzlogik ist nicht dargestellt.

## Patentansprüche

1. Verfahren zum Schutz der abschaltbaren Leistungshalbleiter eines eingangsseitig an einen Gleichspannungszwischenkreis geschalteten Wechselrichters in Drehstrom-Brückenschaltung bei Ausgangskurzschlüssen, wobei ein Zwischenkreis-Kurzschließer am Eingang und Ausgangsdrosseln am Ausgang des Wechselrichters vorgesehen sind, dadurch gekennzeichnet, daß bei Auftreten eines Ausgangskurzschlusses
- alle abschaltbaren Leistungshalbleiter (V11,V12,V21,V22,V31,V32) einer Phase (4,5,6) durch Ausschaltsignale (A1,A2,A3) gesperrt werden, wenn diese Phase am Kurzschluß beteiligt ist und ihr Laststrommeßwert (MIPH1,MIPH2,MIPH3) im Augenblick der Erkennung des Kurzschlusses kleiner als ein vorgebbarer erster Grenzwert (S2) ist,
- alle abschaltbaren Leistungshalbleiter einer am Kurzschluß nicht beteiligten Phase durch Ausschaltsignale gesperrt werden,
- die abschaltbaren Leistungshalbleiter einer am Kurzschluß beteiligten Stromrichterphase durch Löschsperrsignale (L1,L2,L3) den augenblicklich bestehenden Schaltzustand beibehalten, wenn der Laststrommeßwert dieser Phase den ersten Grenzwert (S2) überschreitet, wobei ein Löschsperrsignal (L1,L2,L3) Vorrang vor einem Ausschaltsignal (A1,A2,A3) hat, und
- der Zwischenkreis-Kurzschließer (17) durchgeschaltet wird, wenn der Laststrommeßwert einer beliebigen Stromrichterphase einen über dem ersten Grenzwert (S2) liegenden zweiten Grenzwert (S3) überschreitet.

2. Verfahren nach Anspruch 1, dadurch gekennzeichnet, daß jeweils der Betrag des Laststrommeßwertes herangezogen wird.

3. Verfahren nach Anspruch 1 und/oder 2, dadurch gekennzeichnet, daß der erste Grenzwert (S2) unter Beachtung der Induktivität der Ausgangsdrosseln (18,19,20) so bemessen ist, daß beim Sperren der Leistungshalbleiter keinesfalls das Abschaltvermögen der Leistungshalbleiter überschritten wird.

4. Verfahren nach wenigstens einem der Ansprüche 1 bis 3, dadurch gekennzeichnet, daß der zweite Grenzwert (S3) 10 bis 20% über dem maximalen Abschaltstrom eines abschaltbaren Leistungshalbleiters liegt.

5. Verfahren nach wenigstens einem der Ansprüche 1 bis 4, dadurch gekennzeichnet, daß die Ausgangsdrosseln (18,19,20) unter Beachtung der Induktivität der Kurzschließer-Drossel (15) so ausgelegt sind, daß der Stoßstromanteil des ausgangsseitig kurzgeschlossenen Wechselrichters stets innerhalb der zulässigen Belastungsgrenzen der abschaltbaren Thyristoren bleibt.

6. Verfahren nach wenigstens einem der Ansprüche 1 bis 5, dadurch gekennzeichnet, daß ein Ausgangskurzschluß durch durch Vergleich der Stromanstiegsmeßwerte (MDIPH1DT,MDIPPH2DT,MDIPH3DT) der Lastströme mit einem vorgebbaren dritten Grenzwert (S1) ermittelt wird.

7. Verfahren nach Anspruch 6, dadurch gekennzeichnet, daß der dritte Grenzwert derart bemessen ist, daß er bei angeschlossener induktiver Last niemals erreicht, wird bei infolge eines Ausgangskurzschlusses jedoch unwirksamer Last sicher überschritten wird.

8. Verfahren nach den Ansprüchen 6 und 7, dadurch gekennzeichnet, daß der Betrag der Stromanstiegsmeßwerte der Lastströme herangezogen wird.

9. Verfahren nach wenigstens einem der Ansprüche 1 bis 8, dadurch gekennzeichnet, daß die Ausschaltsignale für die Leistungshalbleiter der am Kurzschluß nicht unmittelbar beteiligten Stromrichterphasen verzögert werden.

## Claims

1. Method for protecting the gate-turn-off-type semiconductors of an inverter in a three-phase bridge circuit, connected at the input to a DC link, in the case of output short circuits, a link short-circuiter being provided at the input and output reactors being provided at the output of the inverter, characterized in that when an output short circuit occurs,
- all gate-turn-off-type power semiconductors (V11, V12,V21,V22,V31,V32) of one phase (4,5,6) are blocked by turn-off signals (A1,A2,A3) when this phase is involved in the short circuit and its load current measurement value (MIPH1,MIPH2,MIPH3) is lower than a predeterminable first limit value (S2) at the instant of the detection of the short circuit,
- all gate-turn-off-type power semiconductors of a phase not involved in the short circuit are blocked by turn-off signals,
- the gate-turn-off-type power semiconductors of a converter phase involved in the short circuit retain the currently existing switching state, due to turn-off blocking signals (L1,L2,L3), when the load current measurement value of this phase exceeds the first limit value (S2), a turn-off blocking signal (L1,L2, L3) having precedence over a turn-off signal (A1,A2, A3), and
- the link short-circuiter (17) is switched through when the load current measurement value of any converter phase exceeds a second limit value (S3) which is above the first limit value (S2).

2. Method according to Claim 1, characterized in that in each case the absolute value of the load current measurement value is utilized.

3. Method according to Claim 1 and/or 2, characterized in that, taking into consideration the inductance of the output reactors (18,19,20), the first limit value (S2) is dimensioned in such a manner that, when the power semiconductors are blocked, the turn-off capacity of the power semiconductors is not exceeded in any way.

4. Method according to at least one of Claims 1 to 3, characterized in that the second limit value (S3) is 10 to 20% above the maximum turn-off current of a gate-turn-off-type power semiconductor.

5. Method according to at least one of Claims 1 to 4, characterized in that, taking into consideration the inductance of the short-circuiter reactor (15), the output reactors (18,19,20) are designed in such a manner that the surge current component of the inverter short-circuited at the output always remains in the permissible load limits of the gate-turn-off-type thyristors.

6. Method according to at least one of Claims 1 to 5, characterized in that an output short circuit is determined by by [sic] comparing the current rise measurement values (MDIPH1DT, MDIPPH2DT [sic], MDIPH3DT) of the load currents with a predeterminable third limit value (S1).

7. Method according to Claim 6, characterized in that the third limit value is dimensioned in such a manner that it is never reached when an inductive load is connected but is reliably exceeded when the load is, however, ineffective due to an output short circuit.

8. Method according to Claims 6 and 7, characterized in that the absolute value of the current rise measurement values of the load currents is utilized.

9. Method according to at least one of Claims 1 to 8, characterized in that the turn-off signals for the power semiconductors of the converter phases not directly involved in the short circuit are delayed.

## Revendications

1. Procédé pour protéger les semi-conducteurs de puissance blocables d'un convertisseur continu-alternatif en montage en pont triphasé, branché côté entrée à un circuit intermédiaire à tension continue, en cas de courts-circuits de sortie, un élément de mise en court-circuit du circuit intermédiaire étant prévu à l'entrée et des bobines de réactance de sortie étant prévues à la sortie du convertisseur continu-alternatif, caractérisé par le fait qu'en cas de court-circuit de sortie
- tous les semi-conducteurs de puissance (V11, V12, V21, V22, V31, V32) blocables d'une phase (4, 5, 6) sont bloqués par des signaux de coupure (A1, A2, A3), si cette phase participe au court-circuit et, à l'instant de détection du court-circuit, la valeur mesurée de son courant de charge (MIPH1, MIPH2, MIPH3) est inférieure à une première valeur limite (S2) prédéterminée,
- tous les semi-conducteurs de puissance blocables d'une phase ne participant pas au court-circuit sont bloqués par des signaux de coupure,
- les semi-conducteurs de puissance blocables d'une phase de convertisseur participant au court-circuit sont commandés par des signaux de verrouillage (L1, L2, L3) pour conserver leur état de commutation momentané, si la valeur mesurée du courant de charge de cette phase dépasse la première valeur limite (S2), un signal de verrouillage (L1, L2, L3) ayant la priorité devant un signal de coupure (A1, A2, A3), et
- l'élément (17) de mise en court-circuit du circuit intermédiaire est connecté, si la valeur mesurée du courant de charge de n'importe quelle phase de convertisseur dépasse une deuxième valeur limite (S3) qui est supérieure à la première valeur limite (S2).

2. Procédé selon la revendication 1, caractérisé par le fait que l'on utilise chaque fois la valeur absolue de la valeur mesurée du courant de charge.

3. Procédé selon la revendication 1 et/ou 2, caractérisé par le fait qu'en tenant compte de l'inductance des bobines de réactance de sortie (18, 19, 20), la première valeur limite (S2) est prévue telle que lors du blocage des semi-conducteurs de puissance, la capacité de coupure de ceux-ci ne soit en aucun cas dépassée.

4. Procédé selon au moins l'une des revendications 1 à 3, caractérisé par le fait que la deuxième valeur limite (S3) est supérieure de 10 à 20 % au courant de coupure maximal d'un semi-conducteur de puissance blocable.

5. Procédé selon au moins l'une des revendications 1 à 4, caractérisé par le fait qu'en tenant compte de l'inductance de la bobine (15) de l'élément de mise en court-circuit, les bobines de réactance de sortie (18, 19, 20) sont agencées de manière telle que la fraction de courant de choc du convertisseur continu-alternatif court-circuité côté sortie reste toujours à l'intérieur des limites de charge admissibles des thyristors blocables.

6. Procédé selon au moins l'une des revendications 1 à 5, caractérisé par le fait qu'un court-circuit de sortie est déterminé par comparaison des valeurs mesurées d'augmentation de courant (MDIPH1DT, MDIPH2DT, MDIPH3DT) des courants de charge avec une troisième valeur limite (S1) prédéterminée.

7. Procédé selon la revendication 6, caractérisé par le fait que la troisième valeur limite est prévue telle qu'elle ne soit jamais atteinte lorsque la charge inductive est connectée, mais qu'elle soit dépassée de manière sûre lorsque la charge devient inactive à la suite d'un court-circuit de sortie.

8. Procédé selon les revendications 6 et 7, caractérisé par le fait que l'on utilise la valeur absolue des valeurs mesurées de l'augmentation des courants de charge.

9. Procédé selon au moins l'une des revendications 1 à 8, caractérisé par le fait que les signaux de coupure pour les semi-conducteurs de puissance des phases de convertisseur ne participant pas directement au court-circuit sont retardés.
